(19) Europäisches Patentamt

European Patent Office

Office européen des brevets

(11) **EP 0 498 084 B1**

(12) **EUROPEAN PATENT SPECIFICATION**

(45) Date of publication and mention
of the grant of the patent:
**01.05.1996 Bulletin 1996/18**

(51) Int. Cl.$^6$: **C05F 3/00**, A01K 1/01

(21) Application number: **91200267.2**

(22) Date of filing: **07.02.1991**

(54) **A method for processing manure**

Verfahren zur Behandlung von Gülle

Méthode pour le traitement du lisier

(84) Designated Contracting States:
**AT BE CH DE DK ES FR GB GR IT LI LU NL SE**

(43) Date of publication of application:
**12.08.1992 Bulletin 1992/33**

(73) Proprietor: **VAN ASPERT BEHEER B.V.**
**NL-5401 JP Uden (NL)**

(72) Inventor: **van Aspert, Josef Arnoldus Adrianus Johannes**
**NL-Uden (NL)**

(74) Representative: **de Bruijn, Leendert C. et al**
**Nederlandsch Octrooibureau**
**P.O. Box 29720**
**NL-2502 LS Den Haag (NL)**

(56) References cited:
**EP-A- 426 219**     **EP-A- 0 331 219**
**DE-A- 2 602 085**     **FR-A- 2 260 549**
**FR-A- 2 414 485**

EP 0 498 084 B1

## Description

The invention relates to a method for processing manure, whereby said manure is separated in the livestock house into urine and a faeces fraction, and in which the livestock house has a controlled ventilation. The present invention further relates to a livestock house for carrying out said method.

A method of the abovementioned type is known from European patent application 0 331 219, which describes the separate collection of the liquid and solid waste fractions of rabbits. According to this reference the rabbits are housed in cages, which are suspended on a rack provided with a grating placed under said cages for collecting the solid manure fraction. The liquid manure fraction passes through said grating and is collected in a collection trough in cooperation with and placed under said grating. The grating itself is sloping towards the collection trough for the urine and is delimited on its upper side by means of a closed or almost closed tunnel. The tunnel is provided with a ventilator or equivalent means for aspiration with air.

This reference is related to the separation of manure from small rodents, such as rabbits.

The problem of processing manure from cattle and pigs has also been addressed in the prior art. According to French patent application 2 260 549 and European patent application 0 426 219, the cattle or pig manure is collected collectively - i.e. without separation into a solid and a liquid fraction - at the livestock house and then transported to a central processing plant for the further processing thereof.

FR-A-2 260 549 describes such a central processing plant, and is particularly directed to providing "des installations des grandes dimensions" which of course is required when the manure is processed centrally. At this central processing plant, the manure is separated in a first treatment step into a liquid and a solid fraction, which are then dried during a subsequent drying step.

EP-A-0 426 219 is also related to a process which is carried out at a central processing unit. Again, the first step of the processing plant is to separate the manure into a liquid and a solid fraction, which are then further treated by means of nitrification. According to EP-A-0 426 219 the amount of water in the manure is reduced by means of reverse osmosis, followed by evaporation.

The purpose of the present application is to improve upon the prior methods for processing manure, in particular to provide a method for processing manure which is less costly, more energy effective, and which represents less burden on the environment.

According to the invention these improvements are obtained by, at the location of the livestock house, separately collecting the liquid and solid manure fractions, and then using the ventilation air from the livestock house for predrying the manure fractions, thereby reducing the water content and the volume thereof. The predried manure fractions thus obtained can then be processed further at the location of the livestock house and be used there, or can be transported to a central processing unit for further processing, in which case the volume to be transported to the central processing location is reduced, so that the transport costs and the required transport volume are also decreased.

Further objects and advantages of the present invention will be described hereinbelow.

The invention therefore relates to a method for processing manure, whereby said manure is separated in the livestock house into a urine and a faeces fraction; and in which the livestock house has a controlled ventilation, characterized in that the ventilation air is used for predrying the manure to a dry solid content of more than 30 wt.% in the faeces fraction; and that the livestock house is provided with a heat exchanger for exchanging heat between the air discharge from the livestock house and the fresh air supplied.

The invention further relates to a livestock house constructed for performing said method, wherein said livestock house has a controlled ventilation and is provided with means for collecting manure, characterized in that the means for providing the manure enable separate collection of the solid and liquid faeces fraction, and that the livestock house is provided with the means for collecting the ventilation air and using it for predrying one or both of the separately collected manure fractions, and that the livestock house is provided with a heat exchanger for exchanging heat between the air discharged from the livestock house and the fresh air supplied.

Formerly livestock excreta were a desired product short in supply even in such a degree that it was being imported in large quantities. Presently in many regions, however, there is a great surplus of excreta presenting a heavy burden on the environment due to conversion into ammonia and other effects thereof.

Although the amount of the pig manure is smaller in volume than that of cattle manure the effect thereof caused by the higher phosphate concentration on the surplus is considerable. In comparison the effect of the removal of one cubic meter of pig manure is for that matter almost twice the effect of the removal of one cubic meter of cattle manure. Moreover pigs are permanently housed and the industrialized farmers usually do not have much farmland. In summer time cattle farmers turn their cattle into the field so that this manure is less attractive for a total processing option during the whole year. If the amount of pig manure could be taken off the market completely the environmental burden caused by spreading the surplus of manure on the field would be solved to a large extent. If furthermore during the whole year the pig house climate of the entire piggery and during the normal housing period in the winter time the cattle house climate of the cattle raising is adapted such that the ammonia emission is decreased to about 10% the environmental burden caused thereby on our air would be reduced to acceptable quantities.

Presently large scale research effort is made in order to process semi-liquid manure to produce granules suitable for scattering while the water fraction after treatment should be acceptable for discharge in open water. This is a proper solution especially for the pig manure having high dry solid contents originating from large livestock raising units present at short distance from large processing plants. However, dependant on the selected technique the energy expenditure of the process is high.

The nowadays available possibilities are however not very attractive for large groups of livestock raisers like for instance piglet raisers, cattle raisers and the industialized livestock raisers at farther distance or smaller industrialized livestock raisers. By processing or the removal of this manure from the storage at the farmyard the amounts of manure as such are removed indeed but problems concerning the ammonia emission, stench emission and large scale storage facilities remain.

Now a process of the above described type was found whereby the environmental burden is reduced to a large extent. This process is characterized in that the manure is kept separate in a urine and a faeces fraction; the livestock house has a controlled ventilation, the ventilation air is being used for predrying the manure to a dry solids content of more than 30% by weight in the faeces fraction; and the air discharged from the livestock house exchanges heat by means of a heat exchanger with the fresh air supplied. There upon the separated urine may be treated further in order to render the urine acceptable for concentrating or as a liquid for rinsing in the livestock house. This treatment may consist in an aerobic purification unit, optionally being preceded by a fermentation step.

In case a separation of the proteins from the aerated urine is desired this may be achieved by acidification thereof whereupon the proteins may be removed to a large extent in a well-known manner.

The separated fractions (urine and faeces) may be used directly as a fertilizer, the process then being of interest for the reduction of the ammonia emission, the reduction of the energy consumption in the livestock house and the improvement of the livestock house climate. In view of the specific properties however these separate fractions are most suitable for a further processing.

Either before or after the transfer to a central processing site the urine stream may be evaporated to a concentrate. Hereby one obtains also a condensate stream having a low salt content which condensate stream may be discharged in open water after being subjected to a minor post treatment.

The evaporation employed is operated at a temperature of from 30-100°C. Mechanical vapor recompression is utilized here. This low temperature associated with the mechanical vapor recompression yields a favourable energy efficiency.

For a further processing a considerable reduction in volume is attained by drying the faeces together with the evaporation concentrate to a dry solids content of from 80 to 95 percent by weight.

This drying operation is performed appropriately in a recycle dryer including energy recovery. This dryer is characterized by the completely closed system thereof in which the air for drying is filtered, cooled, dehydrated and reheated again. For reheating use is made of the energy removed from the air stream by cooling and condensation. Alternatively it is also possible to dry the faeces and concentrate stream with other means including tunnel or drum dryers. As a result of the low temperature levels maintained in a view of the optional utilization of the waste heat the tunnel and drum dryers have to be of considerably larger dimensions (thus more expensive) than the recycle dryer. In the recycle dryer different temperature ranges may be maintained so that the sterilization of the manure occurs in the last dryer section. This dryer may be employed at locations where large amounts of waste heat are available like power plants and the like. By means of the recovery of the energy contained in the waste gasses through condensation of the water present in the waste gasses there is achieved a high saving of energy and substantially no environmentally polluting emission. Moreover, the closed system prevents ammonia and stench emission together with drying air.

The novel method provides the opportunity through relatively simple adaptations of the housing to collect the manure separate in a urine and a solid fraction both being removed each day. This is advantageous in that almost no ammonia emission occurs and no high separation expenses are required during the processing operation.

By carrying out this method the air supply for ventilation of the livestock house may be utilized in order to partially predry the solid excreta and to heat the house. The high energy content of this used farmhouse air to be discharged is utilized by means of heat exchangers and by applying a different farmhouse construction for heating the drying air to be supplied.

The separate urine stream carrying a substantially lower load than the separated effluent upon separation of the mixed manure may be aerobically prepurified through direct aeration and optionally acidified and filtrated. The liquid thus obtained may be used for cleaning the livestock house. In case of cattle farms the remaining part may be distributed on the pasture land. Experience shows that substantially no ammonia is emitted by such a thin urine on such a pasture land (less than 10%), while the landbound character of cattle farms offers the opportunity to distribute this urine on the grass within the regulations set by the Government ("Meststoffenwet" = Act concerning fertilizes).

In case of pig farms the remaining part may be sent to small processing units and be concentrated through evaporation by means of mechanical vapor recompression. In case of aerobically treated urine the condensate obtained by the vapor condensation may be disposed off. In some other cases there is yet required a slight treatment of the condensate before disposition thereof. The concentrate may be subjected to post drying.

The predryed faeces stream derived from both pig and cattle farmhouses together with the concentrate from the evaporator may be subjected to a post drying to form a granular organic fertilizer product. Like the evaporation process this may be carried out in the pertaining small processing unit.

Among others the method according to the invention offers the following advantages:

- the method is environmentally very sound (low in ammonia emission, hardly stench, a good livestock housing climate)
- ready usability as a result of the smaller units used; the emphasis being put onto the individual farmer
- the volume to be transported is reduced to less than half the original volume
- the method may be applied to all kinds of manure
- the organic fertilizer has a much higher nitrogen content because no conversion to ammonium occurs as a result of the processing at an early time
- the method has great energetic advantages:

a) saving of energy consumption in the livestock housing due to:

- re-use of the energy content of the vented air for heating the livestock house
- no additional electricity being needed for biobeds or air scrubbers to be installed in future
- no energy for pumping the manure in storage and the agitator means because the manure is delivered without delay

b) reduction of the energy consumption for transportation of the manure to the processing plant due to:

- small plants, consequently short distances
- much smaller volume of manure to be transported

c) considerably lower energy costs for the purification of the aqueous fraction due to:

- the opportunity of an aerobic pre-treatment entailing a relatively low power consumption
- re-use of a part of the aqueous fraction
- evaporation by means of mechanical vapor recompression at a very low temperature for the main stream at the central location yielding a thermally not contaminated product that has been evaporated at low energy costs

d) considerably lower energy costs for the post drying operation of the solid (faeces) fraction:

- the faeces being strongly predried in the livestock house as a result of the dual function of the vented air, i.e. fresh c.q. dry air (the possibility of a dry solids content up to 70 percent by weight, in accordance with laboratory testing), minimum dry solids content of 30%
- drying at the processing site by means of a fluidized bed dryer (while spraying the concentrate originating from the evaporator) and recovery of the energy by means of a direct power drive of two stage heat pumps all at low temperature and hardly with additional thermal energy supply
- relatively low labour quote (90% being carried out at the farmyard) and capital expenditure (per cubic meter of manure processed only 20% with respect to the presently estimated costs for the processing part) in the operating costs
- in case of calamities the dangers are mainly limited to the level of the livestock farm. The processing plant operates with physical processes and is not critical for the product.

Calculations show that at the farm the energy profit is cost effective with respect to the capital expenditure and at the processing site the same is also cost effective on the basis of the estimated product profit in accordance with the figures of the "Nederlandse Meststoffeninstituut" (= Dutch Fertilizer Institute). The method according to the invention thus provides the advantage of not causing additional costs for the livestock holder and as a solution of the broadest feasibility a readily realisable solution to do something about the problem of the surplus of manure while large energy savings are the result thereof.

Description of the drawings:

The invention is elucidated by means of the accompanying drawings which however should not be construed as a limitation.

4

In this drawings Fig. 1 shows an example of a manure drain in a pig house, whereas Fig. 2 represents the system according to the invention and for comparison the traditional system is shown in Fig. 3.

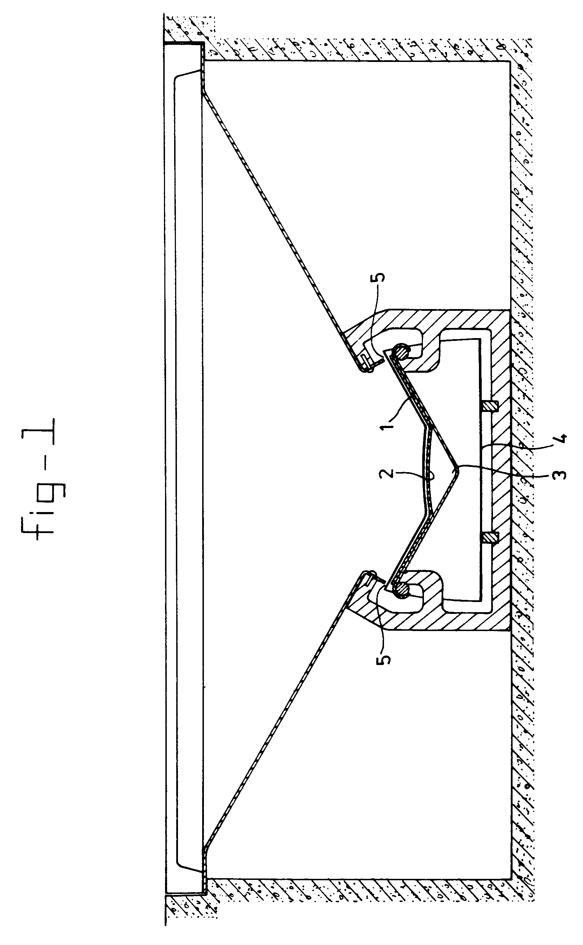

With reference to Fig. 1 1 indicates a fine meshed manure conveyer belt resting on a perforated bottom 2 the urine drain 3 being installed beneath this bottom while the returning manure belt is indicated at 4. The entire assembly has been provided with channels 5 for passing air therethrough. As an alternative possibility the faeces may be transferred in a smooth drain by means of a chain conveyor.

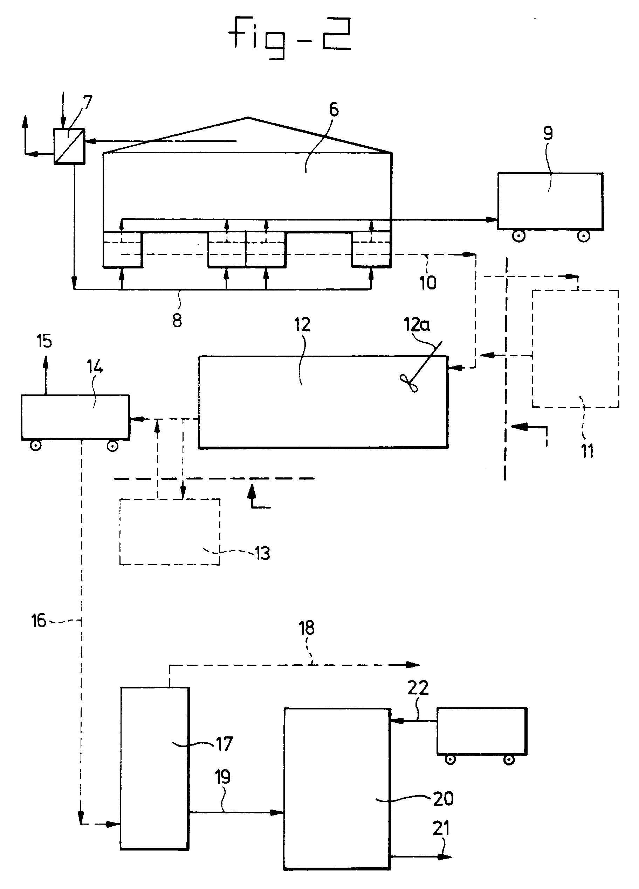

With reference to Fig. 2 6 indicates the livestock house while 7 is a heat exchanger through which ventilation and dry air 8 is supplied. The faeces fraction is discharged into a container 9 whereas the urine fraction is conveyed - either through a fermenter 11 or not - to an aeration chamber 12 provided with an aerator 12a. Either after acidification and protein filtration, represented by a reactor 13, or not the urine fraction is discharged into a urine storage vessel 14 part of which fraction may be withdrawn through a line 15 in order to be used for distribution on farmer's own field or for cleaning the livestock house while the remainder may be conveyed to an evaporator 17 at a central location from which through line 18 a dischargable effluent may be discharged while the evaporated concentrate is passed through line 19 to a fluidized bed dryer 20 where likewise the faeces fraction originating from the container 9 at the farm may again be added through line 22. The dry fertilizer is then obtained through line 21. Like indicated above alternative means for aeration are feasible.

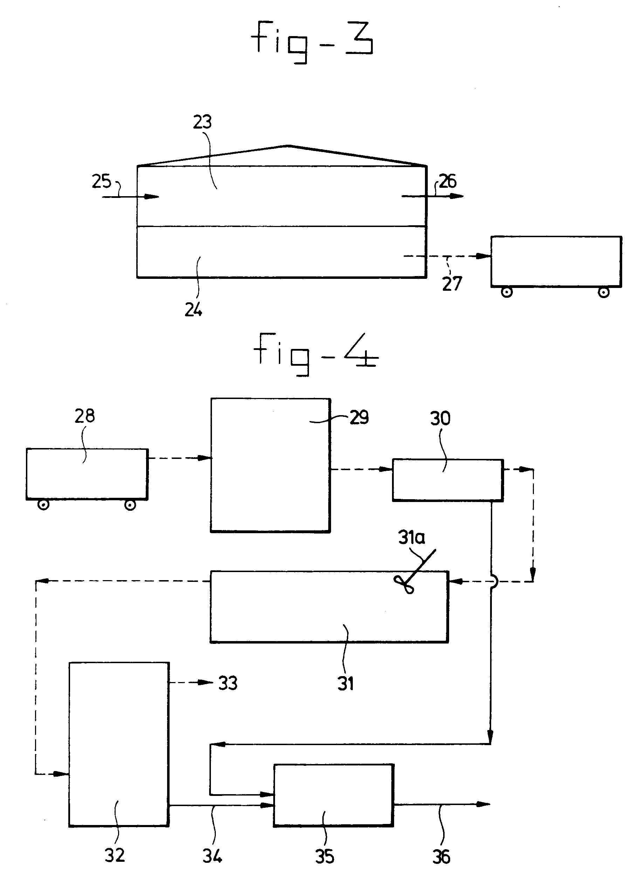

With reference to Fig. 3 a traditional livestock house 23 is represented, the house being provided with a manure storage 24 beneath the house proper, a supply of air for ventilation 25 and discharged of ventilation air 26. The mixed manure is discharged at 27. With reference to Fig. 4 there is shown a large manure processing plant to which the mixed manure is supplied by means of 28, the mixed manure is fermented in a fermentor 29 whereupon the filtrate is sent via a decanter 30 to the aeration chamber 31 provided with an aerator 31a. The aerated wet fraction is sent to an evaporator 32 from which the effluent is discharged via line 33. The concentrate from the evaporator is sent via line 34 to a dryer 35 also receiving the cake from the decantor 30. At 36 the dry fertilizer is obtained.

Detailed description of an embodiment of the MVH process, including comparative data with respect to the present option(s).

The MVH method for processing manure is based on the separation of the manure in the livestock house into a wet manure fraction, the urine, and a relatively dry fraction, the faeces. The faeces and the urine fall into a drain where the urine and faeces are separated mechanically.

Meanwhile there is a continuous supply of air over the drain. This air extracts a large amount of fluid from the urine and the faeces. The water content of the faeces fraction and the volume of urine are accordingly reduced. The faeces are conveyed from the drain by a filter cloth belt or a chain conveyor.

The faeces fraction then having a high dry solids level is further dried whereupon this manure having a high content of organic material (manure of very high quality) can be disposed of economically at large transport distances. The urine is pumped out frequently and has to be purified before being discharged.

In the following calculations a comparison is made between the described housing, treatment and process system (in the following called MVH system) and the usual manure processing system.

A possible construction of the manure drain (made of plastic material) is as follows:

In the middle under the grid floor there is a small drain collecting the manure falling through the grid floor via a slope of plastic material. The small drain has been provided with a double bottom the upper bottom of which has been perforated. The fine meshed filter cloth rests on the perforated bottom. The filter cloth is impervious to the solid fraction, the faeces, but pervious to the wet fraction, the urine.

The urine passes through the perforated bottom into the drain. The drain has been installed at an oblique angle and the urine thus flows into a pump still, the contents of which is frequently pumped to an aeration chamber outside the livestock house. The filter cloth belt functions as a conveyor and it is operated one or more times a day whereby the collected manure is scraped off onto a manure conveyor belt provided at a central place and running in cross direction with the respect to the filter cloth conveyor.

The faeces in the manure are then conveyed into containers immediately. The filter cloth has to be cleaned during this conveying operation.

The best results are obtained with a filter cloth having a mesh width of 0.78 mm *0.78 mm.

Basic assumptions for the energy calculations.

- A pighouse for 1000 fatting pigs.
- Amount of manure per one pig: 5 kg/d; on a yearly basis (1000 pigs) 1825 tonnes of manure;
- Average composition of mixed manure (current data for the transport option and the process method option);

| description | (g/kg of manure) |
|---|---|
| dry solids | 100 |
| ash | 27 |
| total-N | 7.0 |
| $NH_4$-N | 4.0 |
| $P_2O_5$-P | 4.5 |
| $K_2O$ | 5.0 |
| Cu | 0.022 |
| COD | 100 |
| $BOD_5^{20}$ | 40 |

Average composition of the manure separated in the pig houses (MVH manure) calculated on the basis of the average separation results on the filter cloth having a mesh width of 0.78 mm* 0.78 mm in % in the pighouses. The separation results are used with respect to the above average manure composition:

| Separation result | faeces fraction | | urine fraction | |
|---|---|---|---|---|
| | (%) | (g/kg) | (%) | (g/kg) |
| manure volume | 30 | | 70 | |
| dry solids | 86 | 287 | 14 | 20 |
| ash | 63 | 56.7 | 37 | 14.3 |
| N-total | 59 | 13.8 | 41 | 4.1 |
| $NH_4$-N | 29 | 3.9 | 71 | 4.1 |
| $P_2O_5$-P | 90 | 13.5 | 10 | 0.64 |
| $K_2O$ | 40 | 6.7 | 60 | 4.3 |
| CaO | 94 | | 06 | |
| MgO | 90 | | 10 | |
| Cu | 94 | 0.069 | 06 | 0.0019 |
| COD | 90 | 300 | 10 | 14.3 |
| $BOD_5^{20}$ | 90 | 120 | 10 | 5.7 |

- Per day 5000 kg of manure.

    After separation:        1500    kg of faeces

                               3500    kg of urine

(see the above separation results)

Energetical and technical purification comparison of the manure processing system MVH, according to claim 10 and the usual manure processing system tested in Demo plants.

Comparison of these two systems in which all of the manure (from 1000 fatting pigs) has been converted into a fraction that may be transported economically over great distances on the one hand and on the other hand into a fraction to be discharged into the surface water via a drain. The manure processing system MVH includes the following steps:

At the location of the livestock industry:

1. Manure separation and drying in the livestock house in combination with an improved ventilation and heat recovery;
2. Aeration of the separated liquid manure with or without nitrification. Loading conditions similar to those of the aeration system in Demo plants;

At the central location of the processing unit:

3. Evaporation of the aeration effluent by means of an evaporator including a low temperature and mechanical recompression for the evaporation of the liquid manure at a relatively low temperature to a concentrate of 5 percent of the original volume.
4. Drying of the separated solid manure (faeces fraction after separation in the livestock house) and the evaporator concentrate in a closed fluidized bed dryer including a heat recovery system.
5. Process air treatment.

The usual processing method.
The system of the Demo manure process includes the following manure processing steps.

At the location of the livestock industry:

1. Treatment of the air in order to limit the ammonia losses

At the location of a large manure processing plant:

2. Fermentation;
3. Separation of the fermented manure by means of a decanter;
4. Aeration of the decanter filtrate, with or without buffered nitrification;
5. Evaporation of the aeration effluent. This evaporator is operated at a higher temperature than the evaporator of the manure processing method MVH and evaporates to a concentrate containing 35 percent by weight of solids;
6. Drying of the decanted manure and the evaporator concentrate. The condensate is cooled by means of air. There is no heat recovery.
7. Process air treatment.

Manure processing method in combination with manure separation and manure drying in the livestock house, system MVH.
Drying in accordance with the MVH method of the faeces and the urine by means of a ventilation.

Exploratory calculation.

The required ventilation is different dependent on the season. In winter time about 30 $m^3$/hour per pig. In summer time about 80 $m^3$/hour per pig. For the calculation the basic assumption is a ventilation need of about 50 $m^3$ of air/hour per pig. For 1000 pigs per livestock house this means a required ventilation of 50,000 $m^3$ of air/hour.

Daily 1000 pigs produce 1500 kg of faeces (28.7% ds) including 1070 kg of water and 3500 kg of urine (2.0% ds). Per one hour this corresponds with 62.5 kg of faeces including a water content of 44.6 kg and 145.8 kg of urine. Research in chicken houses has shown that it is possible to remove 5 - 10 g of water per 1 $m^3$ of air by ventilation.

Although practical tests yielded better results the basic assumption in our calculation is that per 1 $m^3$ of air 1 gram of water is extracted from the faeces. Per hour this corresponds with 50.000 g of water (50.000 $m^3$ of ventilated air per hour). 50 kg of water is considerably more than the amount that can be extracted from the faeces.

It is possible to dry the whole manure stream of the wet fresh manure of pigs to a dry solids content of 60% by weight. Since we have a separate system of faeces and urine it is possible to reach after drying a dry solids content of the faeces through ventilation of 70% by weight. This results in a reduction of the faeces to about 25.6 kg per hour having a dry solids content of 70% by weight. Thus 36.9 kg of fluid has been evaporated.

Since the evaporatable amount of urine diminishes as the result of drying the faeces 13.1 kg of liquid can be extracted from the urine (together 50 kg). The separated manure then has to be drawn off per hour: 25.6 kg of faeces having a dry solids content of 70% by weight and 132.7 kg of urine having a dry solids content of about 2.2% by weight. Aerobic purification of the urine fraction in accordance with the MVH method.

A. Aerobic purification without nitrification

| Data on aerobic purification: | |
| --- | --- |
| volume of aeration basin | 24.2 m$^3$ |
| After extraction of 9% of liquid caused by ventilation in the pig house: | |
| BOD content of influent | 6.3 g/l |
| N-total of influent | 4.4 g/l |
| D.S. content of influent | 22 g/l |
| Flow rate Q = 132.7 l/hour | 3.18 m$^3$/day |
| BOD load B = 20.06 kg/day | 0.83 kg/m$^3$ aeration basin.day |
| sludge load kg = B/Ga | 0.1 kg/kg.day |
| sludge content Ga | 8.3 kg/m$^3$ aeration basin |
| Aeration time | 7.5 days |
| Purification of BOD | 94 % |
| BOD content of effluent | 0.38 g/l |
| D.S. reduction of 20% | |
| D.S. content of effluent | 25.6 g/l |
| Temperature of aerated liquid manure | 15 °C |
| Oxygen demand OT | 1.05 kg/m$^3$ aerated volume.day |
| Maximum oxygen demand OM = 1.25* OT | 1.32 kg/m$^3$.d. |
| Oxygen supply capacity OC=OM/a.fc | 1.65 kg/m$^3$.d. |
| OC/load | 1.99 kg oxygen/kg BOD |
| Energetic yield aeration | 0.40 kg oxygen/MJ |
| Energy consumption 4.98 MJ/kg BOD = 31.3 MJ/m$^3$ of liquid manure = 8.7 kWh/m$^3$ of liquid manure | 27.7 kWh/1000 pigs.day of electric energy |

B. Aerobic purification with nitrification

| The above mentioned conditions with nitrification of N-total | 99% |
| --- | --- |
| Oxygen demand OT | 3.72 kg/m$^3$ aerated volume.day |
| Maximum oxygen demand OM = 1.25*OT | 4.65 kg/m$^3$.d. |
| Oxygen supply capacity OC = OM/a.fc = OM/0.8 | 5.81 kg/m$^3$.d. |
| OC/load | 7.0 kg oxygen/kg BOD |
| Energetic yield aeration | 0.40 kg oxygen/MJ |
| Energy consumption 17.5 MJ/kg BOD=110.3 MJ/m$^3$ of effluent = 30.6 kWh/m$^3$ | 97.4 kWh/1000 pigs.day of electric energy |

Evaporation in accordance the MVH method of aerated effluent in a low temperature evaporator with mechanical vapour recompression

| Influent of evaporator | 3.18 m$^3$/day |
|---|---|
| D.S. content | 17.6 g/l |
| BOD | 0.38 g/l |
| N-total | 4.4 g/l |

| Effluent: | |
|---|---|
| Concentrate: 5 vol.%,0.159 m$^3$/day; 35.2% D.S. | 512 g/l |
| Condensate: 95 vol.%, 3.021 m$^3$/day; 0% D.S. | |

| Energy consumption per day: | |
|---|---|
| Electric energy for evaporation | 20 kWh/m$^3$ influent |
| 3.18 m$^3$/day requires | 63.6 kWh of electric energy |

Drying in accordance with the MVH method of the separated manure cake and evaporated concentrate in a closed fluidized bed dryer with heat recovery system.

Influent:

Separated manure cake 614 kg 70 percent by weight of D.S. (separation and drying in the pig house); Evaporator concentrate 159 kg, 35.2 percent by weight of D.S. Mixed 773 kg, 62.8% of D.S.

Effluent:

Product: D.S. content after drying 90 percent by weight, 540 kg
Condensate: 233 kg, 0% D.S.

| Energy consumption per day: | |
|---|---|
| The evaporation of 1 kg of liquid requires about | 3 MJ |
| Thermic energy: 699 MJ = 194 kWh | |
| Electric energy: | 27 kWh |

| Process air treatment: | |
|---|---|
| Ventilation air various components | 1350 m$^3$/day |
| Energy consumption per day: | 5 kWh of electric energy |

Manure treating process according to Demonstration system (central Demo system) for processing mixed manure.

| Relevant data concerning untreated manure: | |
|---|---|
| COD mixed manure | 100 kg/m$^3$ |
| COD/BOD | 2.5 |
| BOD mixed manure | 40 kg/m$^3$ |
| N-total | 7 kg/m$^3$ |
| D.S. content | 10 percent by weight |

| Fermentor with heat power unit for the biogas | |
|---|---|
| Contents: | 75 m$^3$ |
| Influent | 5 m$^3$ of mixed manure/day |
| Residence time | 15 days |
| BOD-reduction 30%: BOD content fermented manure | 28 kg/m$^3$ |
| N-mineralisation | 70 percent by weight |
| D.S. destruction | 18 percent by weight |

| Energy consumption per day: | |
|---|---|
| Electric energy: average calculated power for pumps etc. | 22 kWh |
| Thermic energy: heating supplied manure from 10°C to 35°C requires | 245 kWh |
| Energy yield from biogas produced: 18 m$^3$ of biogas/m$^3$ manure having an energy value of 7 kWh = 126 kWh/m$^3$ of manure 5 m$^3$ of manure/day yields 630 kWh of energy | |
| 25% nett of electric energy | 157.5 kWh |
| 60% nett of thermic energy | 378 kWh |

| Separation of the fermented manure | |
|---|---|
| Fermented manure | 5 m$^3$/day |
| Dry solids | 8.2 % by weight |
| Aerobic drain sludge | 0.44 m$^3$/day |
| Dry solids of drain sludge | 6 % by weight |
| Influent manure separation | 5.44 m$^3$/day |
| Dry solids | 8 % by weight |
| BOD content | 25.7 kg/m$^3$ |

| Separation result: | |
|---|---|
| BOD separation | 71 % in cake |
| cake | 25 % of manure volume having a D.S content of 21.5 % by weight |
| | 29 % in filtrate |
| filtrate | 75 % of manure volume having a D.S. content of 3.5 % by weight |
| BOD content of dry solids | 73.1 kg/m$^3$ |
| BOD content of filtrate | 10 kg/m$^3$ |
| N-separation | 65 % in filtrate, |
| | 35 % in solids |
| N-content of cake | 9.8 kg/m$^3$ |
| N-content of filtrate | 6.1 kg/m$^3$ |
| Average calculated power consumption | 2 kWh/m$^3$ of influent = |
| | 10.9 kWh/day of electric energy |

Treatment of the effluent after separation

A. Aerobic treatment without nitrification

| Data aerobic purification: | |
|---|---|
| Volume of aeration basin | 49 m$^3$ |
| flow rate Q = 170 l/hour | 4.08 m$^3$/day |
| BOD content of influent | 10 g/l |
| N-total of influent | 6.0 g/l |
| D.S. content of influent | 35 g/l |
| BOD load B = 40.8 kg/day | 0.83 kg/m$^3$ aeration basin/day |
| sludge load k = B/Ga | 0.1 kg/kg.day |
| sludge content Ga | 18.3 kg/m$^3$ aeration basin |
| Aeration time | 12 days |
| Purification of BOD | 94 % |
| BOD content of effluent | 0.6 g/l |
| D.S. reduction 20%: D.S. content of effluent | 28 g/l |
| Temperature of aerobic liquid manure | 15 °C |
| oxygen demand OT | 1.05 kg/m$^3$ aeration basin.day |
| maximum oxygen demand OM = 1.25 * OT | 1.32 kg/m$^3$.d. |
| oxygen supply capacity OC = OM/a.fc = OM/0.8 = | 1.65 kg/m$^3$.d. |
| OC/load = | 1.99 kg oxygen/kg BOD |
| Energetic yield aeration | 0.40 kg oxygen/MJ |
| Energy consumption 4.97 MJ/kg BOD = 49.7 MJ/m$^3$ influent = 13.8 kWh/m$^3$ = | 56.3 kWh/1000 pigs.day of electric energy |

B. Aerobic treatment with nitrification
The above mentioned conditions with nitrification N-total 99%

| | |
|---|---|
| Oxygen demand OT = | 3.3 kg/m$^3$ aeration basin.day |
| Maximum oxygen demand OM = 1.25*OT | 4.13 kg/m$^3$.d. |
| Oxygen supply capacity OC = OM/a.fc = OM/0.8 | 5.2 k/m$^3$.d. |
| OC/load = | 6.3 kg oxygen/kg BOD |
| Energetic yield aerator | 0.40 kg oxygen/MJ |
| Energy consumption 15.75 MJ/kg BOD = 157,5 MJ/m$^3$ of influent = 43,7 kWh/m$^3$ | 163.9 kWh/1000 pigsxday |

Evaporation of effluent after aerobic treatment with or without denitrification

| | |
|---|---|
| Influent evaporator: | 4.08 m$^3$/day |
| D.S. content | 28 g/l |
| BOD | 6 g/l |
| N-total | 5.0 g/l |

| Effluent: | |
|---|---|
| Concentrate: 35% by weight of D.S.; | 0.326 m$^3$/day |
| Condensate: 0% by weight of D.S.; | 3.75 m$^3$/day |

| Energy consumption per day: 0.46 kg steam/kg of evaporated water 1 kg of steam requires about 3.6 MJ (80% yield) | |
|---|---|
| Thermal energy: 6215 MJ = | 1726 kWh |
| Electric energy: | 10.4 kWh |

Drying separated manure cake and evaporator concentrate

| Influent: | |
|---|---|
| Evaporated manure cake 1360 kg | 21.5 % by weight of D.S. |
| Evaporated concentrate 326 kg | 35 % by weight of D.S. |
| mixed 1686 kg | 24.1 % by weight of D.S. |

Effluent:

| | |
|---|---|
| Product: | D.S. contents after drying to 90% by weight, 452 kg. |
| condensate: | 1365 kg, 0% by weight of D.S.. |

| | |
|---|---|
| Energy consumption per day: | |
| The evaporation of 1 kg of liquid requires: | about 5 MJ. |
| Thermal energy: 6170 MJ = | 1714 kWh |
| Electric energy | 36 kWh |

Treatment of process air

| | |
|---|---|
| Ventilation air various components | 1750 m³/day |
| Energy consumption per day: | 6.5 kWh of electric energy |

Total costs for housing, pretreatment and processing manure in accordance with the MVH system, per day and per year (excluding capital expenditures).

| | consumption thermal | consumption electrical |
|---|---|---|
| separation in the pig house | | |
| drying of faeces in the pig house: | see housing (central heating and ventilation) | |
| drying of urine in the pig house: | | |
| aerobic treatment without nitrification | | 27.7 |
| aerobic treatment with nutrification | | 97.4 |
| evaporation | | 63.6 |
| drying | 194 | 27 |
| air treatment | | 5 |
| Total without nitrification | 194 kWh | 123.3 kWh |
| Total with nitrification | 194 kWh | 193 kWh |

|  |  | per day | per year |
|---|---|---|---|
| Energy costs: | thermal 194 kWh | Dfl. 11.12 | Dfl. 4058.- |
|  | electrical 193 kWh at Dfl. 0.16 | Dfl. 30.88 | Dfl. 11271.- |
| Chemicals consumption CaO buffered nitrification 60 kg/day at Dfl. 0.20/kg | | Dfl. 12.- | Dfl. 4380.- |
| Labour costs and infrastructure | | Dfl. 26.- | Dfl. 9490.- |
| Additional freight costs, 10 km single trip | | Dfl. 13.30 | Dfl. 4854.- |
| Energy costs housing (central heating and ventilation of the pig house) | | | Dfl. 8200.- |
| Sub total costs | | | Dfl. 42253.- |
| Product yield 207 tonnes/year at Dfl. 165.-/tonne | | | Dfl. 34155.- |
| Energy cost optimum pighouse, treating including nitrification and processing per 1000 pigs | | | Dfl. 8100.- |

Remark:

Without manure treatment or the ammonia control the costs for livestock housing (heating and ventilation of the housing) amount to Dfl. 22600.- per year so that without the capital expenditures the MVH-method yields an economic saving of Dfl. 14500.-.

Total energy costs for livestock housing, storage of manure at the livestock industry and manure treatment process for the conventional system (excluding capital expenditures) are

|  | consumption | | yield | |
|---|---|---|---|---|
|  | thermal | electric | thermal | electric |
| fermentation | 245 | 24 | 378 | 158 |
| separation | | 10.9 | | |
| aerobic treatment without nitrification | | 56.3 | | |
| aerobic treatment with nitrification | | 163.9 | | |
| evaporation | 1726 | 10.4 | | |
| drying | 1714 | 36 | | |
| air treatment | | 6.5 | | |
| Total without nitrification | 3685 | 144.1 | 378 | 158 |
| Nett thermal energy consumption | 3307 kWh | | | |
| Nett electricity | -14 kWh | | | |
| Total with nitrification | 3685 | 251.2 | 378 | 158 |
| Nett thermal energy consumption | 3307 kWh | | | |
| Nett electricity consumption | 93.7 kWh | | | |

|  | per day | per year |
|---|---|---|
| Thermal energy costs: 3307 kWh | Dfl. 183.70 | Dfl. 67050.- |
| Electricity costs: 93.7 kWh | Dfl. 14.99 | Dfl. 5472.- |
| Consumption of chemicals: |  |  |
| CaO for nitrification: 75 kg/day | Dfl. 15.- | Dfl. 5475.- |
| Further chemicals: 5 kg/day | Dfl. 2.- | Dfl. 730.- |
| Labour costs and infrastructure | Dfl. 65.- | Dfl. 23725.- |
| Additional freight costs, 10 km single trip | Dfl. 17.50 | Dfl. 6387.50 |
| Storage at farm |  | Dfl. 1600.- |
| Energy costs housing (central heating and ventilation) |  | Dfl. 22600.- |
| Ammonia removal |  | Dfl. 25500.- |
| Sub total costs |  | Dfl. 158539.- |
| Product yield 165 tonnes/year at Dfl. 150.-/tonne |  | Dfl. 24750.- |
| Energy and processing costs usual system with macro manure processing, per 1000 pigs |  | Dfl. 133789.- |

Remark:

These include all costs, i.e. heating, reduction of ammonia emission and manure processing costs.

## Claims

1. A method for processing manure, whereby said manure is separated in the livestock house into a urine and a faeces fraction; the livestock house has a controlled ventilation, **characterized in that** the ventilation air is used for predrying the manure to a dry solids content of more than 30% by weight in the faeces fraction; and that the livestock house is provided with a heat exchanger for exchanging heat between the air discharged from the livestock house and the fresh air supplied.

2. The method according to claim 1, **characterized in that** the urine is aerobically purified after either being subjected to fermentation or not.

3. The method according to claim 1, **characterized in that** the urine is treated in another way than in claim 2 in order to prevent ammonia emission when used for cleaning the livestock house, spreading on the field and upon concentrating the urine.

4. The method according to claim 1 or 2 or 3, **characterized in that** at the processing location the remaining urine stream is evaporated to a concentrate and the evaporated water is condensed to a condensate stream.

5. The method according to claim 2 or 4, **characterized in that** the aerated urine is acidified and the proteins are separated for the main part.

6. The method according to claim 2 or 4 or 5, **characterized in that** the aeration is carried out as an aeration with buffered nitrification while adding lime.

7. The method according to claim 1-6, **characterized in that** the evaporation is carried out at from 30-100°C while employing an evaporation of the mechanical vapor recompression type.

8. The method according to claim 1-7, **characterized in that** the faeces together with the evaporation concentrate is dried to a dry solids content of from 80 to 95 wt.%.

9. The method according to claim 1, **characterized in that** the faeces are dried to a dry solids content of from 80-95 wt.%.

10. The method according to claim 8 or 9, **characterized in that** a recirculation dryer is used for drying.

11. Livestock house constructed for performing the method of claim 1, wherein said livestock house has a controlled ventilation and is provided with a means for collecting manure, **characterized in that** the the means for providing the manure enables separate collection of the solid- and liquid faeces fraction, and that the livestock house is provided with a means for collecting the ventilation air and using it for predrying one or both of the separately collected manure fractions.

## Patentansprüche

1. Verfahren zur Behandlung von Gülle, wobei diese Gülle im Stall in eine Harn- und eine Kotfraktion getrennt wird; und der Stall über eine Zwangsbelüftung verfügt, dadurch gekennzeichnet, dass die Ventilationsluft dazu verwendet wird, um die Gülle auf einen Trockensubstanzgehalt von über 30 Gew.-% in der Kotfraktion vorzutrocknen; und dass der Stall mit einem Wärmeaustauscher versehen ist, um Wärme zwischen der vom Stall ausströmenden Luft und der zugeführten Frischluft auszutauschen.

2. Verfahren gemäss Anspruch 1, dadurch gekennzeichnet, dass der Harn, gegebenenfalls nach Fermentation, aerobisch gereinigt wird.

3. Verfahren gemäss Anspruch 1, dadurch gekennzeichnet, dass der Harn anders als in Anspruch 2 angegeben behandelt wird, um das Entweichen von Ammoniak bei Verwendung zur Stallreinigung, bei Ausbringen auf das Kulturland und bei der Konzentrierung des Harns zu vermeiden.

4. Verfahren gemäss Anspruch 1 oder 2 oder 3, dadurch gekennzeichnet, dass man den restlichen Harnstrom an der Verarbeitungsstelle unter Erhaltung eines Konzentrats verdampft und das verdampfte Wasser zu einem Kondensatstrom kondensiert.

5. Verfahren gemäss Anspruch 2 oder 4, dadurch gekennzeichnet, dass man den belüfteten Harn ansäuert und die Proteine grösstenteils abtrennt.

6. Verfahren gemäss Anspruch 2 oder 4 oder 5, dadurch gekennzeichnet, dass man die Belüftung in Form einer Belüftung mit gepufferter Nitrifizierung unter Zusatz von Kalk durchführt.

7. Verfahren gemäss Anspruch 1-6, dadurch gekennzeichnet, dass man die Verdampfung bei 30-100°C unter Verwendung eines Verdampfungsverfahrens des mechanischen Dampfrückverdichtungstyps durchführt.

8. Verfahren gemäss Anspruch 1-7, dadurch gekennzeichnet, dass man den Kot zusammen mit dem Verdampfungskonzentrat auf einen Trockensubstanzgehalt von 80 bis 95 Gew.-% trocknet.

9. Verfahren gemäss Anspruch 1, dadurch gekennzeichnet, dass man den Kot auf einen Trockensubstanzgehalt von 80-95 Gew.-% trocknet.

10. Verfahren gemäss Anspruch 8 oder 9, dadurch gekennzeichnet, dass man zum Trocknen einen Umlufttrockner verwendet.

11. Stall zur Durchführung des Verfahrens gemäss Anspruch 1, wobei dieser Stall über eine Zwangsbelüftung verfügt und über ein Mittel zum Auffangen der Gülle versehen ist, dadurch gekennzeichnet, dass das Mittel zum Liefern der Gülle getrenntes Auffangen der festen und flüssigen Kotfraktionen gestattet, und dass der Stall mit einem Mittel zum Auffangen der Abluft und dessen Verwendung zum Vortrocknen von einer oder beiden getrennt aufgefangenen Güllefraktionen versehen ist.

## Revendications

1. Procédé pour traiter du lisier, par lequel on sépare ledit lisier dans l'étable à bestiaux en une fraction d'urine et en une fraction de matières fécales, l'étable à bestiaux comportant une ventilation réglée, caractérisé en ce que l'air de ventilation est utilisé pour présécher le lisier pour obtenir une teneur en matière sèche supérieure à 30% en poids dans la fraction de matières fécales; et en ce que l'étable à bestiaux est munie d'un échangeur de chaleur pour échanger de la chaleur entre l'air évacué de l'étable à bestiaux et l'air frais alimenté.

2. Procédé selon la revendication 1, caractérisé en ce que l'urine est soumise à une purification aérobie après avoir été soumise à une fermentation ou non.

3. Procédé selon la revendication 1, caractérisé en ce que l'urine est traitée d'une autre manière que celle indiquée à la revendication 2, dans le but d'empêcher l'émission d'ammoniac lorsqu'on l'utilise pour nettoyer l'étable à bestiaux, pour l'étendre sur les champs et pendant le procédé de la concentration de l'urine.

4. Procédé selon la revendication 1 ou 2 ou 3, caractérisé en ce que, à l'endroit de traitement, on évapore le courant d'urine restant pour obtenir un concentrat et on condense l'eau évaporée pour obtenir un courant de condensat.

5. Procédé selon la revendication 2 ou 4, caractérisé en ce que l'urine aérée est acidifiée et les protéines sont séparées pour la majeure partie.

6. Procédé selon la revendication 2 ou 4 ou 5, caractérisé en ce que l'aération est réalisée sous forme d'une aération à nitrification tamponnée, tout en ajoutant de la chaux.

7. Procédé selon les revendications 1-6, caractérisé en ce que l'évaporation est réalisée à 30-100°C, tout en utilisant une évaporation de type à recompression mécanique de la vapeur.

8. Procédé selon les revendications 1-7, caractérisé en ce que les matières fécales, conjointement avec le concentrat d'évaporation, sont séchées pour obtenir une teneur en matière sèche de 80 à 95% en poids.

9. Procédé selon la revendication 1, caractérisé en ce que les matières fécales sont séchées pour obtenir une teneur en matière sèche de 80-95% en poids.

10. Procédé selon la revendication 8 ou 9, caractérisé en ce qu'on utilise un dispositif de séchage à recirculation pour le séchage.

11. Etable à bestiaux construite pour la mise en oeuvre du procédé selon la revendication 1, dans laquelle ladite étable à bestiaux possède une ventilation réglée et est munie d'un moyen pour récolter le lisier, caractérisée en ce que le moyen pour procurer le lisier permet la récolte séparée des fractions solides et liquides de matières fécales, et en ce que l'étable à bestiaux est munie d'un moyen pour récolter l'air de ventilation et pour l'utiliser à présécher une des fractions ou les deux fractions de lisier récoltées séparément.

# fig-1

EP 0 498 084 B1

# Fig-2

# fig-3

# fig-4